# EUROPÄISCHE PATENTSCHRIFT

(11) **EP 3 375 576 B1**
(45) Veröffentlichungstag und Bekanntmachung des Hinweises auf die Patenterteilung: **29.04.2026**
(21) Anmeldenummer: 17161525.5
(22) Anmeldetag: 17.03.2017
(51) Int. Cl.: B25J 19/00, B25J 15/06, B25J 15/00

(54) **VERFAHREN UND VORRICHTUNG ZUR ZUSTANDSKONTROLLE VON VAKUUMSAUGERN EINER GREIFVORRICHTUNG**
METHOD AND DEVICE FOR INSPECTING THE CONDITION OF VACUUM SUCTION UNITS OF A GRIPPING DEVICE
PROCÉDÉ ET DISPOSITIF DE CONTRÔLE DE L'ÉTAT DE VENTOUSES D'UN DISPOSITIF DE PRÉHENSION

(43) Veröffentlichungstag der Anmeldung: 19.09.2018
(73) Patentinhaber: TRUMPF Werkzeugmaschinen SE + Co. KG, 71254 Ditzingen (DE)
(72) Erfinder: Deiss, Magnus, 70372 Stuttgart (DE); Winterhalter, Markus, 79189 Bad Krozingen (DE); Fecker, Sebastian, 79106 Freiburg (DE); Hofstetter, Christoph, 79331 Teningen (DE)
(74) Vertreter: Trumpf Patentabteilung

(56) Entgegenhaltungen:
- WO-A1-2010/038315
- GB-A- 2 330 205
- US-A- 5 164 558

## Beschreibung

Die Erfindung betrifft ein Verfahren und eine Vorrichtung zur Zustandskontrolle von Vakuumsaugern einer Greifvorrichtung, die zum Greifen von Werkstücken mit Vakuum beaufschlagt werden.

Aus der WO 2010/038315 A1 ist ein Verfahren zur Zustandskontrolle von Vakuumsaugern einer Greifeinrichtung bekannt, die zum Greifen von Werkstücken mit Vakuum beaufschlagt werden. Jeder Vakuumsauger weist ein an dem Werkstück angreifendes Saugelement auf. Die Saugelemente werden mit zumindest einem Ventil angesteuert. Bei dem Verfahren zur Zustandskontrolle von Vakuumsaugern wird eine Prüfvorrichtung und zumindest eine Saugplatte der Greifvorrichtung zueinander ausgerichtet, wobei die Prüfvorrichtung in einem Ausgangszustand angeordnet ist. Zum Prüfen der Saugelemente werden die Saugelemente der zumindest einen Saugplatte und die Prüfeinrichtung in Kontakt gebracht und die Saugelemente mit Vakuum beaufschlagt. Zur jeweiligen Prüfung der Saugelemente wird von der Prüfvorrichtung ein Signal ausgegeben, sobald an der Prüfvorrichtung eine Veränderung gegenüber dem Ausgangszustand erfasst wird.

Aus der US 5,164,558 A ist ein Schalter bekannt, der aus einer oberen auf eine verformbare Membrane aufgebrachten Elektrode und einer unteren Elekrode besteht. Diese Elektroden können in einem ersten stabilen Zustand der Membrane getrennt bleiben und in einem anderen stabilen Zustand der Membrane in Kontakt gebracht werden. Dieser Schalter kann beispielsweise als Vakuumsensor benutzt werden. Mehrere dieser Schalter können außerdem als Sensor zusammengebaut werden.

Aus der EP 1 967 301 A1 ist eine maschinelle Anordnung zur Bearbeitung von plattenförmigen Werkstücken mit einer Bearbeitungseinrichtung sowie eine Handlingsvorrichtung für die Bearbeitungsprodukte bekannt. Diese Bearbeitungsmaschine dient zur Bearbeitung von plattenförmigen Werkstücken, insbesondere Blechen. Bevorzugt ist dabei vorgesehen, dass eine Stanz- und/oder Schneidbearbeitung durchgeführt wird. Zur Handhabung der Werkstücke umfasst die Handlingsvorrichtung eine Greifvorrichtung. Diese Greifvorrichtung weist ein oder mehrere Saugplatten auf, wobei an jeder Saugplatte eine Vielzahl von Vakuumsaugern vorgesehen ist. Zum Greifen der Werkstücke werden die Vakuumsauger zur Anlage an das Werkstück gebracht. Darauffolgend wird ein Vakuum angelegt, wodurch das Werkstück durch die Vakuumsauger ergriffen wird. Darauffolgend kann die Handhabung der Werkstücke erfolgen. Jeder dieser Vakuumsauger besteht aus einem an dem Werkstück angreifenden Saugelement sowie einem Ventil zur Steuerung des Vakuumsaugers.

Solche Vakuumsauger unterliegen beim Einsatz einer solchen Greifvorrichtung einem Verschleiß. Dieser Verschleiß kann an einem Saugöffnungsrand auftreten, beispielsweise in Form von Rissen. Des Weiteren können im Haltebereich der Saugelemente zur Saugplatte Überbelastungen auftreten, welche die Funktionsfähigkeit der Sauger beeinträchtigen. Für die Funktionsfähigkeit der Vakuumsauger ist auch wesentlich, dass der Zustand der Ventile überwacht wird, um die Saugelemente zum Greifen des Werkstücks als auch zum Lösen von dem Werkstück sicher anzusteuern.

Der Erfindung liegt die Aufgabe zugrunde, ein Verfahren zur Zustandskontrolle von Vakuumsaugern einer Greifvorrichtung sowie eine Vorrichtung zur Durchführung der Zustandskontrolle von Vakuumsaugern vorzugschlagen, um eine einfache Prüfung durchzuführen, die manuell durch den Bediener oder automatisiert erfolgen kann.

Diese Aufgabe wird durch ein Verfahren zur Zustandskontrolle von Vakuumsaugern einer Greifvorrichtung, die zum Greifen von Werkstücken mit Vakuum beaufschlagt werden, wobei jeder Vakuumsauger ein an dem Werkstück angreifendes Saugelement und jedem Saugelement oder einer Gruppe von Saugelementen zumindest ein Ventil zugeordnet ist, gelöst, bei welchem zumindest eine Saugplatte der Greifvorrichtung, die mehrere Vakuumsauger umfasst und eine Prüfvorrichtung, welche mehrere Prüfeinrichtungen umfasst, zueinander ausgerichtet werden, so dass jedem Vakuumsauger eine Prüfeinrichtung gegenüberliegt, wobei jede Prüfeinrichtung in einem Ausgangszustand oder Ausgangsposition angeordnet ist und gemäß einer ersten Ausführungsform zum Prüfen der Saugelemente die Vakuumsauger der zumindest einen Saugplatte und die Prüfeinrichtungen der Prüfvorrichtung in Kontakt gebracht und die Vakuumsauger mit Vakuum beaufschlagt werden und von jeder Prüfeinrichtung ein Signal ausgegeben wird, sofern von der Prüfeinrichtung eine Veränderung des Ausgangszustandes oder Ausgangsposition erfasst wird. Dies ermöglicht, dass durch das in Kontakt bringen der Saugelemente mit der jeweiligen Prüfeinrichtung und durch das Anlegen eines Vakuums erfasst werden kann, ob das jeweilige Saugelement die Greiffunktion ausübt. Sofern dies der Fall ist, wird durch die Prüfeinrichtung ein Signal ausgelöst. Dadurch kann in einfacher Weise erfasst werden, ob das angelegte Vakuum von dem Saugelement auch in eine Haltekraft umgesetzt wird.

Alternativ ist bei einer zweiten Ausführungsform der Erfindung zum Prüfen des oder der Ventile der Greifeinrichtung, die jeweils ein Saugelement oder eine Gruppe von Schaltelementen ansteuern, vorgesehen, dass nach dem zueinander Ausrichten der Saugelemente und der Prüfeinrichtungen die Vakuumsauger mit Vakuum beaufschlagt und darauffolgend die Vakuumsauger der zumindest einen Saugplatte und die Prüfeinrichtungen der Prüfvorrichtung in Kontakt gebracht werden. Von jeder Prüfeinrichtung wird ein Signal ausgegeben, sofern von der Prüfeinrichtung eine Veränderung der Ausgangsposition der Prüfeinrichtung erfasst wird. Sofern sich die Ausgangsposition der Prüfeinrichtung verändert, bedeutet dies für die Prüfung des oder der Ventile, dass ein Defekt vorliegt.

Durch ein solches Verfahren ist zumindest eine einfache Überprüfung der Funktionsfähigkeit von einer Vielzahl von Vakuumsaugern ermöglicht. Insbesondere bei Saugplatten mit einer Vielzahl von kleinen Saugelementen kann somit zeitsparend eine Funktionsprüfung sowohl für die Saugelemente als auch des Ventils oder der Ventile der Greifvorrichtung durchgeführt werden.

Die Veränderung der Ausgangsposition der Prüfeinrichtung wird in der Form oder in der Lage der Prüfeinrichtung oder in einer Kombination der Form und Lage der Prüfeinrichtung erfasst. Dies ermöglicht einen einfachen mechanischen Aufbau der Prüfeinrichtung, sowie eine sichere Erkennung.

Des Weiteren ist bevorzugt vorgesehen, dass eine Änderung der Ausgangsposition der Prüfeinrichtung erfasst und in eine Schaltposition der Prüfeinrichtung durch zumindest eine Optik ausgegeben wird. Die Ausgabe des zumindest einen optischen Signals ermöglicht eine einfache manuelle Kontrolle des Bedieners als auch eine automatisierte Auswertung. Auch durch die Ausgabe von elektrischen Signalen durch die Prüfeinrichtung bei einer Zustandsänderung, die auf einer Anzeige dargestellt sein können oder in optische Signale umgewandelt werden können, wird eine einfache Erkennung von funktionstüchtigen und von beschädigten Saugelementen als auch Ventilen der Greifeinrichtung ermöglicht.

Die Prüfeinrichtung wird bevorzugt in Vorbereitung auf die Prüfung in eine Ausgangsposition versetzt. Sofern ein Saugelement der Prüfeinrichtung zugeordnet ist und das Vakuum anliegt, wird eine Zustandsänderung bewirkt und die Prüfeinrichtung in eine Schaltposition übergeführt. Durch dieses beispielsweise aktive Überführen in die Schaltposition wird ein Signal ausgegeben. Dies kann in Form eines optischen Signals oder eines elektrischen Signals sein, so dass eine leichte Zuordnung zu dem jeweils geprüften Saugelement oder Ventil gegeben ist. Sofern eine Signaländerung nicht erfolgt, wird dadurch zu erkennen gegeben, dass das Saugelement oder Ventil nicht mehr funktionstüchtig ist oder zumindest der Überprüfung bedarf.

Bei einer ersten bevorzugten Ausführungsform der Prüfeinrichtung zur Durchführung des Verfahrens ist vorgesehen, dass die Prüfeinrichtung als eine Schnappscheibe ausgebildet ist, welche in einer Ausgangsposition der Prüfvorrichtung entgegengesetzt zum Saugelement ausgerichtet ist, und nach der Kontaktierung mit dem Saugelement und dem Anlegen des Vakuums bei einem funktionsfähigen Saugelement in eine konvexe Ausrichtung als Schaltposition übergeführt wird. Alternativ kann anstelle der Schnappscheibe eine Folie mit einer polkappenförmigen Wölbung vorgesehen sein, die in einer Ausgangsposition der Prüfeinrichtung konkav zum Saugelement ausgerichtet ist. Bei dem Überführen in die Schaltposition der Prüfeinrichtung ist die polkappenförmige Wölbung bevorzugt konvex ausgerichtet. Des Weiteren kann alternativ vorgesehen sein, dass die Prüfeinrichtung als eine ebene Folie ausgebildet ist, welche in der Schaltposition ebenfalls eine konvex Ausrichtung einnimmt und somit signalisiert, dass ein funktionsfähiges Saugelement an der Prüfeinrichtung angreift.

Die Schaltpositionen der Prüfeinrichtungen können bevorzugt optisch und/oder haptisch durch den Benutzer erfasst werden oder optisch und/oder elektrisch durch einen Sensor oder durch elektrische Schaltelemente oder durch beschreibbare Sensoren mit magnetischen Partikeln erfasst werden. Alle diese Ausführungsformen ermöglichen eine einfache Erfassung.

Des Weiteren ist bevorzugt vorgesehen, dass die Prüfeinrichtung als eine Magnetscheibe in einer Kammer einer Halteplatte ausgebildet ist, welche innerhalb der Kammer in der Höhe veränderbar geführt wird und dass nach dem Kontaktieren mit dem Saugelement und dem Anlegen des Vakuums bei einem funktionsfähigen Saugelement die Magnetscheibe aus einer Ausgangsposition in eine Schaltposition übergeführt wird. Nach dem Abschalten des Vakuums und der Entnahme der Prüfvorrichtung von der Saugplatte kann optisch erfasst werden, welche der Vakuumsauger funktionsfähig sind, nämlich vorzugsweise diejenigen, bei welchen die Magnetscheibe aus einer unteren Position in der Kammer in eine obere Position innerhalb der Kammer übergeführt sind. Durch die magnetische Haltekraft der Magnetscheibe kann die Schaltposition aufrechterhalten werden

Eine weitere bevorzugte Ausführungsform des Verfahrens sieht vor, dass die Prüfvorrichtung durch ein elektrisches Signal die Funktionsfähigkeit der Saugelemente anzeigt, wobei die Prüfeinrichtung aus zumindest einer Kontaktfläche an einer Leiterplatte ausgebildet ist, der eine Schaltmatte mit Kontakten zugeordnet ist, wobei jeder Kontakt in einer Druckzelle der Schaltmatte vorgesehen ist, und die Kontakte in einer Ausgangsposition beabstandet zu den Kontaktflächen positioniert sind und dass nach dem Kontaktieren der Saugelemente und dem Anlegen des Vakuums über zumindest eine Bohrung in der Leiterplatte benachbart zur Kontaktfläche ein Unterdruck in der Druckzelle erzeugt und bei einem funktionsfähigen Saugelement der Kontakt an die Kontaktfläche angelegt und ein elektrisches Signal ausgegeben wird. Dadurch ist eine einfache und schnelle Prüfung ermöglicht.

Des Weiteren ist bei dem Verfahren zur Funktionsprüfung von Vakuumsaugern bevorzugt vorgesehen, dass nach dem Kontaktieren der Vakuumsauger und der Prüfeinrichtungen und einer darauffolgenden Verfahrbewegung der Vakuumsauger relativ zu den Prüfeinrichtungen von jeder Prüfeinrichtung ein Signal ausgegeben wird, sobald von der Prüfeinrichtung eine Veränderung der Ausgangsposition erfasst wird. Bei dieser Ausführungsform des Verfahrens zur Zustandskontrolle ist vorgesehen, dass durch eine aktive Bewegung der Prüfvorrichtung und/oder der zumindest einen Saugplatte der Greifvorrichtung relativ zueinander eine Änderung der Prüfeinrichtung aus einer Ausgangsposition in eine Schaltposition bewirkt wird und in Abhängigkeit der gewünschten Signalausgabe diese Änderung anzeigt oder nicht anzeigt und entsprechend ausgewertet wird.

Eine einfache Zustandskontrolle der Vakuumsauger wird bevorzugt dadurch ermöglicht, dass die Prüfeinrichtung als ein federgelagerter Stößel in der Lage veränderbar an einer Halteplatte der Prüfvorrichtung geführt wird und die Veränderung der Lage des Stößels aus einer Ausgangsposition durch eine Verfahrbewegung der Saugplatte und der Prüfeinrichtung relativ zueinander mit zunehmender Entfernung in eine Schaltposition bei einem funktionsfähigen Saugelement durch einen Sensor erfasst wird. Sofern das Saugelement aufgrund des Anlegens des Vakuums die erforderliche Saugkraft aufbringt, wird bei zunehmendem Abstand der Saugplatte und der Prüfeinrichtung relativ zueinander der federgelagerte Stößel gegenüber der Halteplatte der Prüfvorrichtung verfahren. Dadurch kann ein Schaltsignal ausgelöst werden. Beispielsweise kann am Ende des Stößels ein elektrischer Kontakt vorgesehen sein, der in einer Ausgangsposition mit einem Kontakt auf einer Leiterbahn anliegt und somit einen elektrischen Durchgang bildet und durch das Abheben des Stößels eine Unterbrechung erfolgt und die Prüfeinrichtung in die Schaltposition übergeführt wird. Auch kann dadurch geprüft werden, ob die Saugplatte mit deren Vakuumsaugern die noch erforderliche Haltekraft aufbringen kann und um eine funktionssichere Handhabung von Werkstücken sicherzustellen.

Des Weiteren ist bevorzugt vorgesehen, dass eine Wegstrecke der Verfahrbewegung der zumindest einen Saugplatte und der Prüfvorrichtung relativ zueinander und voneinander weg erfasst wird und aus dem erfassten Weg und einer Änderung der Schaltposition der Prüfeinrichtung eine Abreißkraft der Saugelemente von der Prüfeinrichtung ermittelt wird. Dadurch kann eine erweiterte Aussage getroffen werden, ob beispielsweise noch eine hinreichende Haltekraft durch das Saugelement erzeugt werden kann oder ob die Haltekraft zwar noch gegeben ist, jedoch in Kürze mit einem Austausch zu rechnen ist und deshalb vorsorglich ein Austausch eines solchen Saugelementes vorgenommen wird.

Des Weiteren kann bevorzugt vorgesehen sein, dass zum Prüfen der Ventile der Greifvorrichtung die Prüfeinrichtung als ein federgelagerter Stößel ausgebildet ist, der in der Lage veränderbar an der Halteplatte der Prüfvorrichtung geführt wird und bei einer Veränderung der Lage des Stößels aus einer Ausgangslage durch eine Vergrößerung des Abstands zwischen der zumindest einen Saugplatte der Greifvorrichtung und der Prüfeinrichtung bei einem nicht funktionsfähigen Ventil durch einen Sensor erfasst wird. Die Prüfung des Ventils erfolgt der Gestalt, dass beim Entfernen der zumindest einen Saugplatte von der Prüfeinrichtung das Saugelement sich von dem Stößel bei einem funktionsfähigen Ventil löst, so dass der Stößel in einer Ausgangsposition verbleibt und dadurch ein funktionsfähiges Ventil erkannt wird. Sofern der Stößel aus der Ausgangsposition abgehoben und in eine Schaltposition übergeführt wird, wird bei der Prüfung des Ventils ein Signal ausgegeben, welches bedeutet, dass das Ventil nicht mehr funktionsfähig ist.

Die der Erfindung zugrundeliegende Aufgabe wird des Weiteren durch eine Prüfvorrichtung gelöst, welche eine Vielzahl von Prüfeinrichtungen aufweist, die in einer Ebene nebeneinander an einer Außenseite einer Trägeranordnung oder einem Gehäuse vorgesehen sind, wobei jede Prüfeinrichtung in einer Ausgangposition vorgesehen ist und in eine Schaltposition überführbar ist und jede Prüfeinrichtung unabhängig von der anderen Prüfeinrichtung in die Schaltposition durch einen der Prüfeinrichtung zugeordnetes Saugelement überführbar ist und die Ausgangsposition und/oder die Schaltposition in jeder Prüfeinrichtung separat erfassbar ist. Dies ermöglicht eine einfache und schnelle Einzelprüfung aller an einer Greifvorrichtung vorgesehenen Vakuumsauger. Insbesondere bei im Durchmesser klein ausgebildeten Saugelementen und einer Vielzahl an einer Saugplatte angeordneten Saugelementen kann dadurch eine zeitsparende Prüfung von einem Teil oder aller an der zumindest einen Saugplatte angeordneten Vakuumsauger ermöglicht werden. Zudem ist eine Einzelprüfung und eine Einzelerkennung beziehungsweise eine Zustandskontrolle von jedem einzelnen Saugelement ermöglicht. Da jedes Saugelement oder eine Gruppe von Saugelementen durch ein zugehöriges Ventil aktiviert wird, ist somit auch eine Zustandskontrolle des jeweils zugehörigen Ventils ermöglicht.

Die Prüfvorrichtung sieht vor, dass die Prüfeinrichtung aus Kontaktflächen an einer Leiterplatte ausgebildet ist, der eine Schaltmatte mit Kontakten zugeordnet ist, wobei jeder Kontakt in einer Druckzelle der Schaltmatte vorgesehen ist, der in einem Ausgangszustand beabstandet zur Kontaktfläche positioniert ist und nach dem Kontaktieren des Saugelementes und Anlegen des Vakuums an der Leiterplatte über zumindest eine Bohrung in der Leiterplatte benachbart zu den Kontaktflächen ein Unterdruck in der Druckzelle erzeugt wird und der Kontakt an den gegenüberliegenden Kontaktflächen zur Anlage kommt. Diese alternative Ausgestaltung weist den Vorteil auf, dass keine mechanisch bewegten Teile vorgesehen sind. Die Schaltmatte ist bevorzugt aus Silikon ausgebildet und somit nachgiebig. Mit diesen Prüfvorrichtungen ist es auch möglich, eine sichere Abblasfunktion der Saugelemente zu testen, indem in der Druckzelle ein Überdruck erzeugt wird. Bevorzugt kann die Schaltmatte in beide Richtungen ausgelenkt werden, und insbesondere sind an jeder Seite der Schaltmatte Kontaktflächen vorgesehen und jede Kontaktfläche ist jeweils zumindest einem Kontakt einer Leiterplatte zugeordnet.

Die Erfindung sowie weitere vorteilhafte Ausführungsformen und Weiterbildungen derselben werden im Folgenden anhand der in den Zeichnungen dargestellten Beispiele näher beschrieben und erläutert.
Es zeigen:
Figur 1 eine perspektivische Ansicht einer Bearbeitungsmaschine und einer Handlingsvorrichtung mit einer Vakuumsauger aufweisenden Greifvorrichtung,
Figur 2 eine schematische Ansicht von unten auf eine Saugplatte der Greifvorrichtung in Figur 1,
Figur 3 eine schematische Seitenansicht einer ersten Ausführungsform einer Prüfvorrichtung für Vakuumsauger in einer Prüfposition,
Figur 4 eine schematische Teilansicht auf die Prüfvorrichtung gemäß Figur 3,
Figur 5 eine schematische Seitenansicht einer alternativen Ausführungsform der Prüfvorrichtung für Vakuumsauger in einer Prüfposition,
Figur 6 eine schematische Seitenansicht einer weiteren alternativen Ausführungsform der Prüfvorrichtung für Vakuumsauger in einer Prüfposition,
Figur 7 eine schematische Seitenansicht einer weiteren alternativen Ausführungsform der Prüfvorrichtung für Vakuumsauger in einer Prüfposition,
Figur 8 eine schematische Teilansicht auf Prüfeinrichtungen der Prüfvorrichtung,
Figur 9 eine schematische Seitenansicht einer weiteren alternativen Ausführungsform einer Prüfvorrichtung für Vakuumsauger in einer Prüfposition,
Figur 10 eine schematische Seitenansicht einer alternativen Ausführungsform einer Prüfvorrichtung für Vakuumsauger zu Figur 9 in einer Prüfposition,
Figur 11 eine schematische Seitenansicht einer weiteren alternativen Ausführungsform einer Prüfvorrichtung für Vakuumsauger in einer Prüfposition,
Figur 12 eine schematische Seitenansicht einer erfindungsgemäßen Prüfvorrichtung für Vakuumsauger in einer Prüfposition und
Figur 13 eine schematische Seitenansicht einer alternativen Ausführungsform der erfindungsgemäßen Prüfvorrichtung für Vakuumsauger in einer Prüfposition.

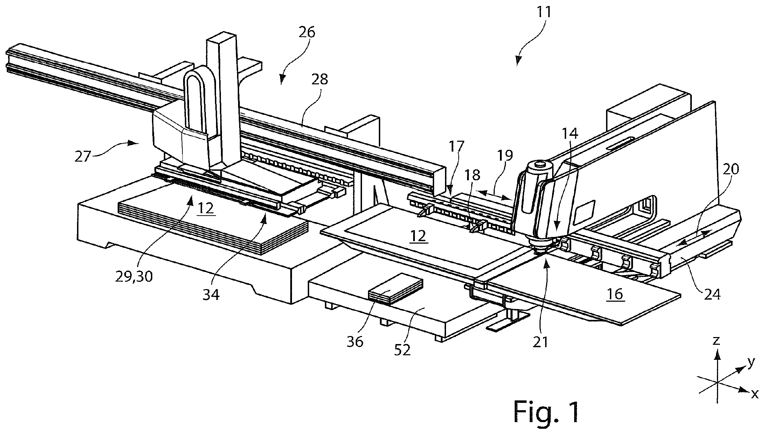

In Figur 1 ist perspektivisch eine Bearbeitungsmaschine 11 dargestellt, welche beispielsweise als Stanz-Maschine ausgebildet ist. Zur trennenden Bearbeitung eines plattenförmigen Werkstücks 12, beispielsweise in Form eines Bleches, ist eine vorzugsweise ortsfeste Bearbeitungseinrichtung 21 mit einem Stanzkopf 14 und mit einem nicht näher dargestellten Stanzstempel vorgesehen. Alternativ kann auch eine Laser-Stanz-Maschine eingesetzt werden, bei der benachbart zum Stanzkopf 14 ein Laserbearbeitungskopf vorgesehen ist. Das zu bearbeitende Werkstück 12 liegt während der Werkstückbearbeitung auf einer Werkstückauflage 16 auf. Das Werkstück 12 wird während der Bearbeitung mit einer Halteeinrichtung 17, welche vorzugsweise Klammern 18 umfasst, gehalten und kann gegenüber dem Stanzkopf 14 in der X-Richtung der Werkstückebene (X/Y-Ebene) mittels eines durch einen Pfeil angedeuteten konventionellen Linearantriebs 19 verfahren werden. In Y-Richtung der Werkstückebene kann das Werkstück 12 bewegt werden, indem die Werkstückauflage 16 zusammen mit der Halteeinrichtung 17 relativ zu einer Unterlage 24, auf welcher die Werkstückauflage 16 gelagert ist, mittels eines durch einen Pfeil angedeuteten herkömmlichen Linearantriebs 20 verfahren wird. Das Werkstück 12 lässt sich auf diese Weise in X- und Y-Richtung gegenüber dem Stanzkopf 14 verschieben, so dass der jeweils zu bearbeitende Bereich des Werkstücks 12 im Bearbeitungsbereich des Stanzkopfes 14 positioniert werden kann. Der Bearbeitungsbereich liegt zwischen dem Stanzkopf 14 und einer nicht näher dargestellten Stanzmatrize, die auswechselbar ist. Entsprechend kann in dem ortsfesten Bearbeitungsbereich des Laserbearbeitungskopfes bei einer Laser-Stanz-Maschine eine Laseroptik angeordnet sein.

Zur Werkstückauflage 16 der Bearbeitungsmaschine 11 ist an einer Stirnseite eine Handlingseinrichtung 26 vorgesehen, welche auch eine Greifeinrichtung 27 umfassen kann, die entlang zumindest einer Linearachse 28 von einer Be- und Entladeposition 29, 30 für das plattenförmige Material 12 in eine Entnahmeposition oder Warteposition verfahrbar ist, um ein bearbeitetes Werkstück 36 aufzunehmen und beispielsweise aus der Bearbeitungsmaschine 11 herauszuführen oder in einem Magazin 50 abzulegen.

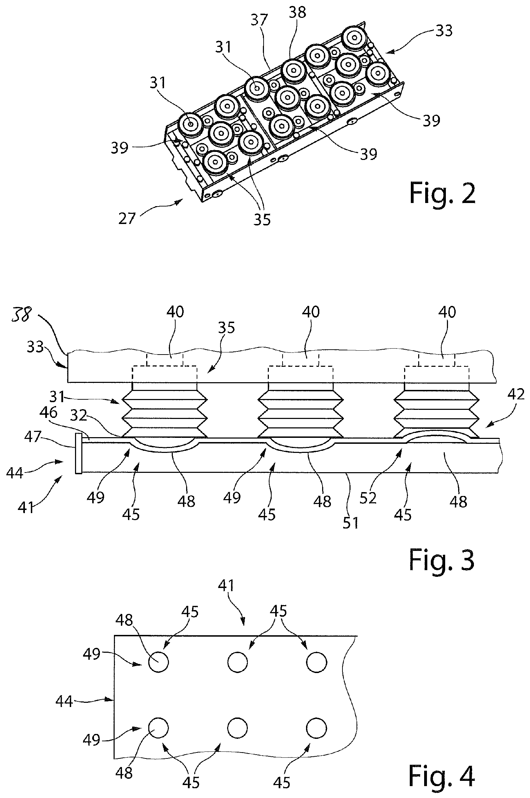

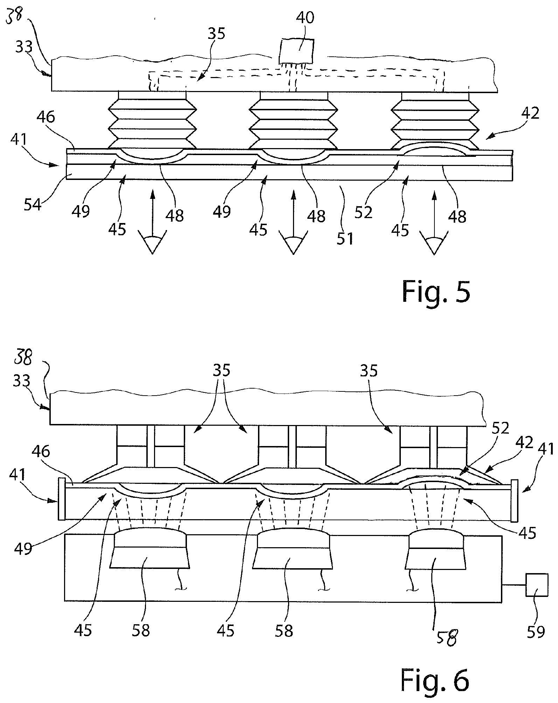

Die Greifeinrichtung 27 kann einen Saugrahmen 34 aufweisen, welcher eine oder mehrere Saugplatten 33 umfasst, wie diese in Figur 2 in einer Ansicht von unten dargestellt ist. An jeder Saugplatte 33 sind mehrere Vakuumsauger 35 vorgesehen. Jeder dieser Vakuumsauger 35 dient als Entnahmesauger. Die Vakuumsauger 35 bestehen gemäß einer ersten Ausführungsform aus einem Saugelement 31, welches gegenüber einer Außenseite 37 eines Gehäuses 38 der Saugplatte 33 hervorsteht und einem Saugelement 31 zugeordneten, jedoch innerhalb dem Gehäuse 38 liegenden Ventil 40 (Figur 3). Alternativ kann vorgesehen sein, dass der Vakuumsauger 35 aus einem Saugelement 31 besteht, welches mit mehreren weiteren Saugelementen 31 oder einer Gruppe von Saugelementen 31 mit einem Ventil 40 ansteuerbar ist. Bei diesen Ventilen 40 kann es sich um reine mechanische Ventile handeln, also sogenannte Passivventile. Solche Passivventile werden allein durch eine Luftströmung wie beispielsweise durch das Anlegen eines Vakuums geschalten. Alternativ kann das Ventil 40 auch ein ansteuerbares, insbesondere elektrisch ansteuerbares Ventil, wie beispielsweise ein Magnetventil, sein. Auch bei dieser Ausführungsform kann vorgesehen sein, dass jedem Saugelement 31 ein Ventil 40 zugeordnet ist oder ein Ventil 40 eine Gruppe von Saugelementen 31 gemeinsam ansteuert. Letztere Ausführungsform ist beispielsweise in Figur 5 dargestellt. Zur Ansteuerung solcher steuerbaren Ventile 40, insbesondere Magnetventile, ist eine nicht näher dargestellte elektrische Steuerungseinrichtung vorgesehen.

Das Saugelement 31 kann als ein aus elastischem Kunststoff bestehenden Balg beziehungsweise Faltenbalg ausgebildet sein. Die Saugplatte 33 ist mit einer Schlauchleitung mit einer Vakuumpumpe verbunden. Zur einzelnen Ansteuerung der Saugelemente 31 werden die Ventile 40 angesteuert. Die Anzahl der Vakuumsauger 35 sowie die Größe der Saugelemente 31 als auch deren Anordnung in Zeilen und Spalten und einem sonstigen Raster ist beliebig und kann an die jeweilige Handhabungsaufgabe angepasst sein, auch können im Durchmesser unterschiedlich große Saugelemente 31 an einer Saugplatte 33 innerhalb eines oder mehrerer Saugerfelder 39 vorgesehen sein. Im Ausführungsbeispiel gemäß Figur 2 sind beispielsweise drei Saugerfelder 39 mit jeweils fünf Vakuumsaugern 35 angeordnet. Jedes dieser Saugerfelder 39 und wiederum jeder Vakuumsauger 35 in dem Saugerfeld 39 ist bevorzugt separat ansteuerbar.

Die Saugplatten 33 können an dem Saugrahmen 34 in Y- und/oder Z-Achse innerhalb des XYZ-Koordinatensystems, welches in Figur 1 dargestellt ist, mit zumindest einem Linearantrieb auch verfahrbar angetrieben sein.

In Figur 3 ist eine schematische Seitenansicht einer Prüfvorrichtung 41 teilweise dargestellt. Diese Prüfvorrichtung 41 und die Saugplatte 33 mit den Saugelementen 31 ist in einer Prüfposition 42 zur Prüfvorrichtung 41 angeordnet. Die Prüfvorrichtung 41 ist in einer Teilansicht von oben in Figur 4 dargestellt. Die Prüfvorrichtung 41 umfasst ein Gehäuse oder eine Trägeranordnung 44, welche eine Kontur aufweist, die ein Saugerfeld 39 der Saugplatte 33 oder mehreren Saugerfeldern 39 der Saugplatte 33 oder der Saugplatte 33 entspricht. Auch kann die Prüfvorrichtung 41 eine flächige Erstreckung aufweisen, die mehreren Saugplatten 33 am Saugrahmen 34 entspricht.

Gemäß der ersten beispielhaften Ausführungsform ist vorgesehen, dass die Trägeranordnung 44 rechteckförmig ausgebildet ist und im Wesentlichen der Kontur der Saugplatte 33 in Figur 2 entspricht.

Die Prüfvorrichtung 41 weist mehrere Prüfeinrichtungen 45 auf. Bevorzugt entspricht die Anzahl der Prüfeinrichtungen 45 der Anzahl der Vakuumsauger 35 der Saugplatte 33. Alternativ kann die Anzahl der Prüfeinrichtungen 45 an der Prüfvorrichtung 41 auch der Anzahl der Vakuumsauger 35 eines Saugerfeldes 39 der Saugplatte 33 entsprechen.

Die Prüfeinrichtung 45 der Prüfvorrichtung 41 ist gemäß der ersten in Figur 3 und 4 dargestellten Ausführungsform durch eine Folie 46 ausgebildet, die in einem Rahmen 47 der Trägeranordnung 44 eingespannt ist. Diese Folie 46 weist polkappenförmige Wölbungen 48 auf, welche in die Folie 46 eingeprägt sein können. Die Wölbungen 48 sind konkav zu einer Außenseite der Trägeranordnung 44 oder einem Gehäuse oder Prüfvorrichtung 41 in einer Ausgangsposition 49 angeordnet. Der Folie 46 gegenüberliegend ist ein Boden 51 der Trägeranordnung 44 vorgesehen. Dieser Boden 51 ist bevorzugt transparent ausgebildet. Alternativ kann der Boden 51 auch entfallen.

Zur Prüfung der Vakuumsauger 35, insbesondere der Saugelemente 31, werden die Prüfeinrichtungen 45 der Prüfvorrichtung 41 und die Saugelemente 31 der Saugplatte 33 zueinander ausgerichtet und aufeinander zu bewegt, so dass ein Saugöffnungsrand 32 der Saugelemente 31 auf der Prüfvorrichtung 41 aufliegt und vorzugsweise die Prüfeinrichtung 45 umgibt. Anschließend wird Vakuum angelegt, welches über die Saugelemente 31 auf die Prüfeinrichtung 45 wirkt. Sofern das Saugelement 31 funktionsfähig ist, wird die Prüfeinrichtung 45 aus der Ausgangsposition 49 in eine Schaltposition 52 übergeführt. Diese Schaltposition 52 kann selbsthaltend sein. Diese Schaltposition 52 kann aber auch nur solange eingenommen bleiben, solange das Vakuum angelegt ist und über den Vakuumsauger 35 auf die Prüfeinrichtung 45 wirkt.

Sofern die Prüfeinrichtung 45 in die Schaltposition 52 übergeführt ist, bedeutet dies im vorliegenden Fall, dass das Saugelement 31 funktionsfähig ist. In dem Fall, in welchem die Prüfeinrichtung 45 in der Ausgangsposition 49 bleibt, ist das Saugelement 31 funktionsuntüchtig. Es bedarf der Prüfung und gegebenenfalls des Austausches.

Durch eine Betrachtung der Prüfvorrichtung 41 von unten kann optisch erfasst werden, welche der Vakuumsauger 35 in Ordnung sind und welche eine Beschädigung aufweisen. Dies kann durch die Einnahme der Schaltposition 52 der jeweiligen Prüfeinrichtung 45 erkannt werden. Alternativ kann anstelle einer optischen Kontrolle durch den Bediener auch eine optische Erfassung mittels zumindest einer Bilderfassungseinrichtung erfolgen. Des Weiteren kann vorgesehen sein, sofern die Prüfeinrichtungen 45 selbsthaltend ausgebildet sind, dass nach dem Abschalten des Vakuums sowie dem Entfernen der Prüfvorrichtung 41 von der Saugplatte 33 eine Betrachtung der Prüfvorrichtung 41 von oben ermöglicht ist und eine Auswertung vorgenommen werden kann.

Eine alternative Ausführungsform der Prüfvorrichtung 41 gemäß Figur 3 ist dahingehend gegeben, dass die Prüfeinrichtung 45 anstelle von polkappenförmigen Wölbungen 48 sogenannte Schnappscheiben aufweist. Diese Schnappscheiben können in der Ausgangsposition 49 analog zu der konkav ausgerichteten polkappenförmigen Wölbung sein. Nach dem Positionieren der Saugelemente 31 zu den Prüfeinrichtungen 45 und dem Anlegen des Vakuums können diese Schnappscheiben in Richtung auf den Innenraum der Saugelemente 31 zu bewegt werden. Durch ein Knackgeräusch kann erkannt werden, dass funktionsfähige Vakuumsauger 35 vorhanden sind. Zudem sind solche Schnappscheiben in der Schaltposition 52 selbsthaltend. Dadurch kann mittels einer optischen Kontrolle eine Erfassung der funktionsfähigen und funktionsuntüchtigen Vakuumsauger 35 erfolgen.

Eine weitere alternative Ausgestaltung der Prüfvorrichtung 41 gemäß Figur 3 sieht vor, dass eine Folie 46 in der Trägeranordnung 44 vorgesehen ist, die in dem Rahmen 47 eingespannt ist und als eine durchgehend ebene Fläche ausgebildet ist. Sobald das Saugelement 31 an dieser Folie 46 anliegt und mit einem Vakuum beaufschlagt wird, geht die Folie 46 aus einer ebenen Ausgangsposition 49 in eine Schaltposition 52 über und weist bei einem funktionsfähigen Saugelement 31 eine konvexe Wölbung auf. Auch dadurch ist eine Prüfung der Vakuumsauger 35 ermöglicht.

Bei der Ausführungsform der Prüfvorrichtung 41 gemäß Figur 3 und den beschriebenen Alternativen erfolgt somit ein Auslösen oder eine Veränderung der Ausgangsposition 49 in die Schaltposition 52 durch Unterdruck.

In Figur 5 ist eine alternative Ausführungsform der Prüfvorrichtung 41 zu Figur 3 und 4 dargestellt. Diese Ausführungsform der Prüfvorrichtung 41 kann im Aufbau der in Figur 3 beschriebenen ersten und zweiten Alternative der Prüfvorrichtung 41 entsprechen. Die Prüfeinrichtung 45 ist also aus einer Folie 46 mit polkappenförmigen Wölbungen 48 oder mit sogenannten Schnappscheiben ausgebildet. Dieser Folie 46 ist ein beschreibbarer Sensor 54 zugeordnet. Dieser beschreibbare Sensor 54 erstreckt sich flächig in Analogie zu den Prüfeinrichtungen 45. Jeder Pol der polkappenförmigen Wölbung 48 oder jeder nach unten weisende Rand der Schnappscheibe steht in der Ausgangsposition 49 mit dem beschreibbaren Sensor 54 in Kontakt. Sobald das Saugelement 31 auf der Folie 46 aufliegt und ein Vakuum angelegt wird, kann bei einem funktionsfähigen Saugelement 31 die Prüfeinrichtung 45 aus der Ausgangsposition 49 in die Schaltposition 52 übergeführt werden. Dadurch steht der Pol 56 nicht mehr in Kontakt mit dem Sensor 54. Dies kann eine optische Änderung bewirken. Beispielsweise kann der beschreibbare Sensor 54 aus einer Vielzahl von magnetischen Partikeln bestehen, die im Ausgangszustand 49 beispielsweise eine Schwärzung im Bereich des Pols 56 bewirken. In der Schaltposition 52 kehrt der beschreibbare Sensor 54 in einen Ausgangszustand bzw. eine Ausgangsfarbe zurück. Das Vorstehende kann auch vertauscht sein.

In Figur 6 ist eine alternative Ausgestaltung der Prüfvorrichtung 41 zu Figur 3 dargestellt. Bei dieser Ausführungsform in Figur 6 ist das Saugelement 31 beispielsweise als ein napfförmiges Saugelement dargestellt. Sowohl das balgförmige als auch das napfförmige Saugelement 31 kann wahlweise bei allen Ausführungsformen eingesetzt werden.

Bei dieser Ausführungsform in Figur 6 ist des Weiteren ergänzend zu den in Figur 3 beschriebenen Ausführungsformen der Prüfvorrichtung 41 jeder Prüfeinrichtung 45 ein optischer Sensor 58 zugeordnet. Hierbei kann es sich um eine oder mehrere Bilderfassungseinrichtungen, wie beispielsweise eine CCD-Kamera, handeln. Diese kann sowohl die Ausgangsposition 49 als auch die Schaltposition 52 erfassen und die erfassten Daten an eine Steuerung und Datenverarbeitungseinrichtung 59 ausgeben. Bevorzugt kann eine Anzeige an der Datenverarbeitungseinrichtung 59 vorgegeben sein, um die Position der funktionsfähigen und/oder funktionsuntüchtigen Saugelemente 31 anzuzeigen. Dadurch kann ein Austausch erleichtert werden.

Alternativ zum optischen Sensor 58 kann auch ein Näherungsschalter vorgesehen sein, der die Veränderung der Prüfeinrichtung 45 aus der Ausgangsposition 49 in die Schaltposition 52 erkennt.

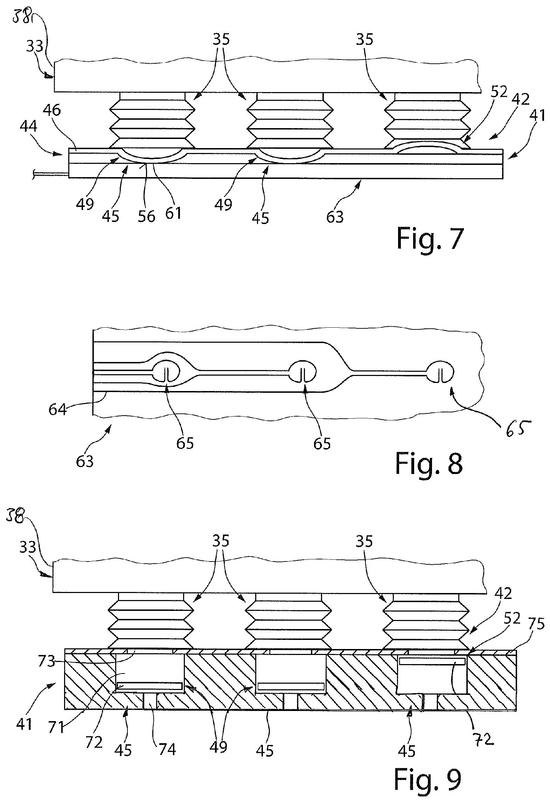

In Figur 7 ist eine weitere alternative Ausgestaltung der Prüfvorrichtung 41 zu Figur 3 dargestellt. Diese Prüfvorrichtung 41 umfasst eine Prüfeinrichtung 45, welche aus einer Folie 46 mit polkappenförmigen Wölbungen 48 oder aus einer Folie 46 mit Schnappscheiben gebildet ist. An den Polen 56 bzw. den nach unten stehenden Rändern der Schnappscheibe ist eine elektrisch leitende Kontaktfläche 61 ausgebildet, die an einem elektrischen Sensor 63 in einer Ausgangsposition 49 anliegt. Der elektrische Sensor 63 kann als eine Leiterplatte 81 ausgebildet sein, welche eine Vielzahl von Leiterbahnen 64 aufweist, die jeweils zu einem Kontakt 65 führen, der der polkappenförmigen Wölbung 48 der Folie 46 oder den Rändern der Schnappscheibe einer jeden Prüfeinrichtung 45 zugeordnet ist (Figur 8). In der Ausgangsposition 49 ist ein leitender Kontakt zwischen der polkappenförmigen Wölbung 48 bzw. der Schnappscheibe und dem Kontakt 65 des elektrischen Sensors 63 gegeben. Sobald die Prüfeinrichtung 45 in die Schaltposition 52 übergeführt wird, unterbricht dieser elektrische Kontakt. Dadurch kann mittels der Steuerung und Datenverarbeitungseinrichtung 59 exakt die Position des funktionstüchtigen und/oder funktionsuntüchtigen Saugelements 31 ermittelt werden.

In Figur 9 ist eine weitere alternative Ausführungsform der Prüfvorrichtung 41 dargestellt. Die Prüfeinrichtung 45 besteht aus einer Kammer 71 in dem Gehäuse beziehungsweise der Trägeranordnung 44, in welchem eine Scheibe 72, vorzugsweise magnetische Scheibe 72, auf und ab bewegbar gelagert ist. Eine obere, die Kammer 71 teils überdeckende Schicht oder Platte 75 ist aus einem magnetischen Material ausgebildet. An einer zum Saugelement 31 weisenden Außenseite des Gehäuses 44 ist eine erste Bohrung 73 und gegenüberliegend am Boden 51 eine zweite Bohrung 74 vorgesehen, welche beide von außen in die Kammer 71 münden.

Sobald das Saugelement 31 an der Prüfeinrichtung 45 anliegt und ein Vakuum angelegt wird, erfolgt bei einem funktionstüchtigen Saugelement 31 eine Auslenkung der Scheibe 72 aus einer Ausgangsposition 49 in die Schaltposition 52. Bei der als Magnet ausgebildeten Scheibe 72 verbleibt diese nach dem Abnehmen der Saugplatte 33 an der Platte 75 von der Prüfvorrichtung 41 in der Schaltposition 52, so dass daraufhin eine Auswertung erfolgen kann.

Bei den vorbeschriebenen Ausführungsformen der Prüfvorrichtung 41 ist vorgesehen, dass zur Durchführung der Zustandskontrolle nach dem Positionieren der Vakuumsauger 35 und der Saugplatte 33 zur Prüfvorrichtung 41 und Ausrichtung zu den jeweiligen Prüfeinrichtungen 45 ein Unterdruck bei einer ruhenden Positionierung der Saugplatte 33 zur Prüfvorrichtung 41 erfolgt.

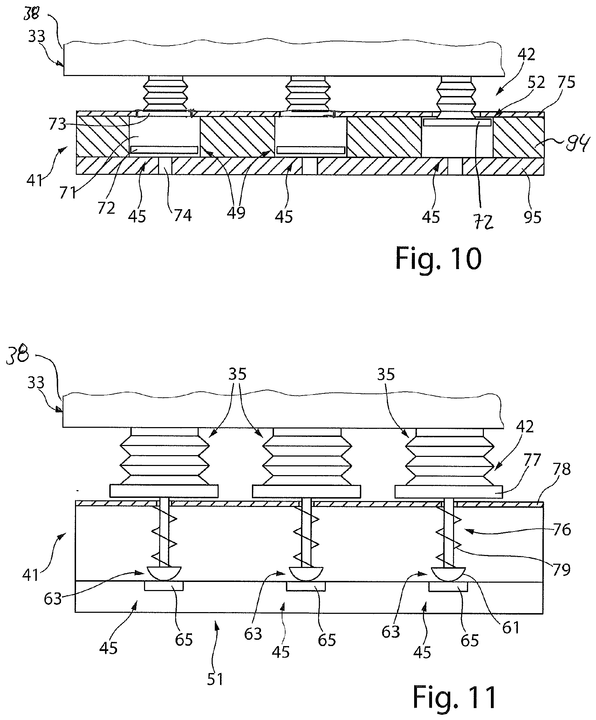

In Figur 10 ist eine alternative Ausführungsform der Prüfvorrichtung 41 zu Figur 9 dargestellt. Die Prüfvorrichtung 41 ist beispielsweise aus drei Lagen oder Platten ausgebildet. Die oberste Platte 75 ist aus einem magnetischen Material ausgebildet. Diese magnetische Platte 75 liegt auf einer nichtmagnetischen Lage oder Schicht 94 auf. In dieser nichtmagnetischen Schicht 94 sind die Kammern 71 eingebracht. Der magnetischen Schicht oder Platte 75 gegenüberliegend ist an der nichtmagnetischen Schicht 94 eine weitere Schicht oder Platte 95 zugeordnet. Diese kann aus einem nichtmagnetischen Material bestehen. Bevorzugt ist diese magnetisch ausgebildet. In dieser Schicht 95 sind die Bohrungen 74 vorgesehen, die in die Kammer 71 münden.

Des Weiteren ist bei dieser Ausführungsform vorgesehen, dass die in der oberen Schicht 75 vorgesehenen Bohrungen 73 möglichst groß ausgebildet sind, jedoch in Bezug auf die Umfangswand der Kammer 71 einen kleinen Überstand bilden, so dass die in der Kammer 71 angeordnete Scheibe 72 sich nicht aus der Kammer 71 lösen kann. Der Durchmesser beziehungsweise die Querschnittsgeometrie der Saugelemente 31 ist auf die Querschnittsgeometrie der Bohrung 73 abgestimmt, so dass das Saugelement 31 durch die erste Bohrung 73 hindurch in die Kammer 71 hinein verfahrbar oder in der Kammer 71 positionierbar ist.

Zur Durchführung einer Prüfung der Saugelemente 31 ist bei dieser Ausführungsform vorgesehen, dass die Saugplatte 33 auf die Prüfvorrichtung 41 zubewegt wird, so dass jedes Saugelement 31 einer Prüfeinrichtung 45 zugeordnet ist. Darauffolgend tauchen die Saugelemente 31 jeweils in die Kammer 71 ein. Nachdem das Saugelement 31 auf der Scheibe 72 in der Ausgangsposition 49 aufliegt, wird das Vakuum angelegt. Darauffolgend werden die Saugplatte 33 und die Prüfvorrichtung 41 voneinander weg bewegt. Dies kann durch eine Relativbewegung der beiden oder nur durch eine Verfahrbewegung der Saugplatte 33 oder der Prüfvorrichtung 41 erfolgen. Sofern das Saugelement 31 funktionstüchtig ist, wird die Scheibe 72 aus der Ausgangsposition 49 in die Schaltposition 52 übergeführt. Die Scheibe 72 wird durch die Magnethaltekraft in dieser Position 72 zur Platte 75 gehalten. Anschließend wird das in der Saugplatte 33 angelegte Vakuum abgeschaltet und die Saugelemente 31 abgehoben. Durch eine darauffolgende Sichtprüfung kann erfasst werden, dass die in der Ausgangsposition 49 verbleibende Scheibe 72 die Position eines defekten Saugelementes 31 anzeigt. Beim Überführen der Scheibe 72 in die Schaltposition 52 wird beispielsweise eine Signaländerung ausgegeben, dass dieses Saugelement 31 funktionstüchtig ist.

In Figur 11 ist eine weitere alternative Ausgestaltung der Prüfvorrichtung 41 zu den vorbeschriebenen Ausführungsformen in einer Seitenansicht dargestellt. Bei dieser Ausführungsform der Prüfvorrichtung 41 ist vorgesehen, dass die Prüfeinrichtung 45 einen auf und ab bewegbaren Stößel 76 aufweist. Dieser Stößel 76 weist eine Anlagefläche 77 zur Aufnahme des Saugelementes 31 auf. Der Stößel 76 ist in einer Halteplatte 78 und dieser gegenüber auf und ab bewegbar geführt. Durch eine Kraftspeicherelement 79 wird der Stößel 76 in einem Ausgangszustand beziehungsweise Ausgangsposition 49 positioniert. In dieser Ausgangsposition 49 liegt eine am Stößel 76 ausgebildete Kontaktfläche 61 an einem Kontakt 65 am Boden 51 an. Hierbei kann wiederum ein elektrischer Sensor 63 vorgesehen sein, wie dieser in Figur 7 und 8 beschrieben ist. Zur Prüfung des Saugelementes 31 ist vorgesehen, dass die Saugplatte 33 zur Prüfvorrichtung 41 ausgerichtet und positioniert und die Saugelemente 31 mit den Prüfeinrichtungen 45 in Kontakt gebracht werden. In diesem Fall liegen die Saugöffnungsränder 32 der Saugelemente 31 an der Anlagefläche 77 des jeweiligen Stößels 76 an. Anschließend wird das Vakuum angelegt. Nunmehr ist bei dieser Ausführungsform zusätzlich vorgesehen, dass eine Relativbewegung zwischen der Saugplatte 33 und der Prüfvorrichtung 41 eingeleitet wird. Die Saugplatte 33 kann gegenüber der Prüfvorrichtung 41 abgehoben werden oder die Prüfvorrichtung 41 kann gegenüber der Saugplatte 33 abgehoben werden oder es folgt eine Relativbewegung zueinander, indem das Saugelement 31 und die Prüfvorrichtung 41 voneinander weg bewegt werden. Sofern das Saugelement 31 funktionstüchtig ist, wird dabei die Prüfeinrichtung 45 in eine Schaltposition 52 übergeführt. Dies bedeutet, der Stößel 76 wird aus der in Figur 11 dargestellten Ausgangsposition 49 abgehoben. Die Kontaktfläche 61 des Stößels 76 wird gegenüber dem Kontakt 65 getrennt. Dadurch wird ein Signal an die Datenverarbeitungseinrichtung 59 weitergeleitet und signalisiert, dass dieses Saugelement 31 funktionsfähig ist. Bleibt die Prüfeinrichtung 45 in der Ausgangsposition 49 findet keine Signaländerung statt und dies wird als ein funktionsuntüchtiges Saugelement 31 ausgewertet.

Mit den beschriebenen Prüfeinrichtungen ist auch eine Zustandskontrolle des jeweiligen Ventils, welches das zu prüfenden Saugelement aktiviert, möglich.

Des Weiteren kann bei dieser Ausführungsform der Prüfvorrichtung 41 (Fig.11) eine Halte-/Abreißkraft der Saugelemente 31 ermittelt werden. Eine Verfahrstrecke, durch welche die Saugplatte 33 und die Prüfvorrichtung 41 zueinander entfernt werden, wird erfasst. Während einer Abhebephase des Stößels 76 befindet sich die Prüfeinrichtung 45 in einer Schaltposition 52. Zum Zeitpunkt des Abreißens, also Lösens, des Saugelementes 31 von der Prüfeinrichtung 45, insbesondere der Anlagefläche 77, kehrt die Prüfeinrichtung 45 in die Ausgangsposition 49 zurück. Dieses Signal kann ebenfalls erfasst und zusammen mit dem zurückgelegten Weg ausgewertet werden, um die Abreißkraft des Saugelementes 31 daraus zu ermitteln bzw. es wird eine definierte Verfahrstrecke zurückgelegt, die einer vorgegebenen Haltekraft entspricht. Anhand des ermittelten Ergebnisses kann auf die vorhandene Haltekraft des/der Saugelemente geschlussfolgert werden.

Die in Figur 11 beschriebene Prüfvorrichtung 41 ist auch zum Prüfen beziehungsweise für die Zustandskontrolle des jeweiligen Ventils 40 der Vakuumsauger 35 vorgesehen. Die Saugplatte 33 wird in einem abgehobenen Zustand gegenüber einer Prüfvorrichtung 41 zu der Prüfeinrichtung 45 positioniert und ausgerichtet. Die Prüfeinrichtungen 45 befinden sich in der Ausgangsposition 49, wie dies in Figur 11 dargestellt ist. Darauf folgend werden die Vakuumsauger 35 mit Vakuum beaufschlagt. Anschließend werden die Vakuumsauger 35 mit den Prüfeinrichtungen 41 in Kontakt gebracht. Darauffolgend wird die Saugplatte 33 von der Prüfvorrichtung 41 abgehoben oder die Prüfvorrichtung 41 von der Saugplatte 33 abgehoben oder beide relativ zueinander wegbewegt. Dies erfolgt vorzugsweise entlang eines vorbestimmten Weges. Sofern durch den Vakuumsauger 35 die Prüfeinrichtung 45 auch nur geringfügig aus der Ausgangsposition 49 in Richtung Schaltposition 52 bewegt wird, erfolgt ein Signal aufgrund der Unterbrechung zwischen dem Kontakt 65 und der Kontaktfläche 61. Ein solches Signal wird ausgewertet.

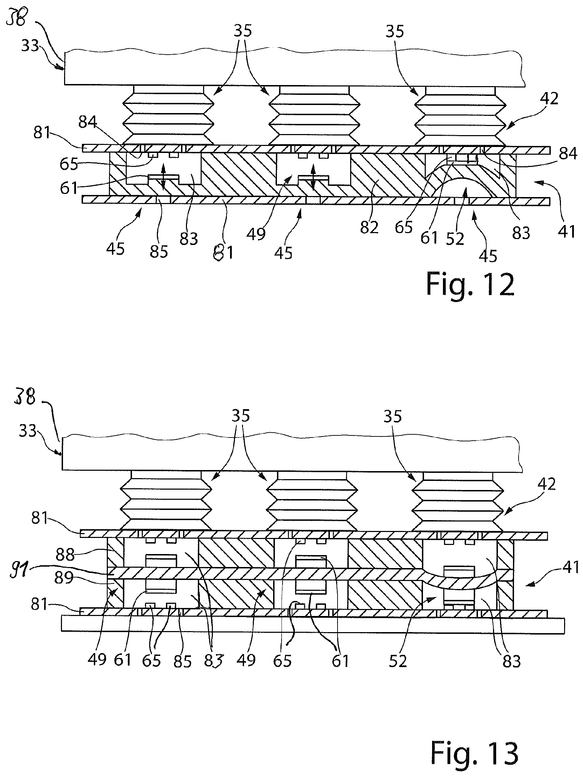

In Figur 12 ist eine erfindungsgemäße und im beiligenden Anspruch 12 definierte Prüfvorrichtung 41 dargestellt. Die Prüfvorrichtung 41 weist wiederum eine Vielzahl von Prüfeinrichtungen 45 auf. Dabei ist vorgesehen, dass eine Oberseite der Trägeranordnung 44 als Leiterplatte 81 ausgebildet ist. Jede Prüfeinrichtung 45 weist Kontakte 65 auf. Zwischen der Leiterplatte 81 und dem Boden 51 der Trägeranordnung 44 ist eine Schaltmatte 82 angeordnet. Diese Schaltmatte 82 weist zur Bildung der Prüfeinrichtung 45 eine Druckzelle 83 auf, innerhalb der eine Kontaktfläche 61 vorgesehen ist. Diese liegt dem Kontakt 65 gegenüber. In die Druckzelle 83 mündet zumindest eine Bohrung 84, die in der Leiterplatte 81 vorgesehen ist. Im Boden 51 sind vorzugsweise im Bereich der Druckzelle 83 ebenfalls Bohrungen 85 vorgesehen. Diese Bohrungen 85 sind durch die Schaltmatte 82 abgedeckt. Die Schaltmatte 82 besteht bevorzugt aus Silikon.

Sobald die Saugelemente 31 in Kontakt mit der Prüfvorrichtung 41 stehen, wird das Vakuum angelegt. Über die Bohrungen 84 wird ein Unterdruck in der Druckzelle 83 erzeugt. Die Kontaktfläche 61 wird in Richtung auf den Kontakt 65 bewegt. Die Kontaktfläche 61 wird aus der Ausgangsposition 49 in eine Schaltposition 52, übergeführt. Bei Kontaktierung von der Kontaktfläche 61 mit dem Kontakt 65 wird ein Signal ausgegeben. Die Funktionsfähigkeit des Saugelementes 31, welches der Prüfeinrichtung 45 zugeordnet ist, wird festgestellt. Die Bohrung 85 vermeidet die Erzeugung einer Sogwirkung, die einer Auslenkbewegung der Kontraktfläche 61 beziehungsweise der Saugmatte 82 aus der Ausgangsposition 49 in die Schaltposition 52 entgegenwirken könnte.

Alternativ kann vorgesehen sein, dass über die Bohrungen 85 im Boden 51 zusätzlich eine Beaufschlagung eines Luftkissens oder einer Druckluft auf die Schaltmatte 82 erfolgt. Dadurch kann ein Schaltpunkt zwischen der Ausgangsposition 49 und der Schaltposition 52 der Schaltmatte 82 verändert werden.

Diese vorbeschriebene Ausführungsform weist den Vorteil auf, dass keine mechanisch bewegten Teile erforderlich sind. Zudem ist ein kostengünstiger Aufbau gegeben.

In Figur 13 ist eine alternative Ausführungsform der erfindungsgemäßen Prüfvorrichtung 41 dargestellt. Diese Ausführungsform der Prüfvorrichtung 41 weist eine Vielzahl von Prüfeinrichtungen 45 auf. Diese Prüfeinrichtungen 45 sind durch eine erste Schicht 88 sowie eine zweite Schicht 89 gebildet, welche vorzugsweise als eine gelochte Schicht ausgebildet sind. Insbesondere ist eine gelochte Silikonfolie vorgesehen. Die Größe der Lochung ist bevorzugt auf die Größe der Kontakte 65 an der oberen und/oder unteren Leiterplatte 81 angepasst. Zwischen den beiden Schichten 88 und 89 ist eine dritte Schicht 91 vorgesehen. Bevorzugt ist diese als eine geschlossene Silikonfolie ausgebildet. An dieser dritten Schicht 91 sind bevorzugt zur oberen Leiterplatte 81 weisend und zur unteren Leiterplatte 81 weisend jeweils Kontaktflächen 61 vorgesehen. Dabei ist der Abstand der Kontaktflächen 61 zu den Kontakten 65 der Leiterplatten 81 derart vorgesehen, dass bei einem entstehenden Unterdruck in der Druckzelle 83 die Kontaktfläche 61 zur Anlage an den Kontakt 65 der oberen Leiterplatte 81 gelangen kann. Diese Druckzelle 83 wird dann von einer in Figur 13 dargestellten Ausgangsposition 49 in eine Schaltposition 52 übergeführt, die beispielsweise der in Figur 12 entspricht. Die dritte Schicht 91 kann bei einem angelegten Überdruck in die entgegengesetzte Richtung ausgelenkt werden und in eine Schaltposition 52 übergeführt werden, wie dies in Figur 13 dargestellt ist. Die Auslenkung der dritten Schicht 91 steht also in Abhängigkeit der durchzuführenden Prüfung und kann sowohl in Richtung auf die obere Leiterplatte 81 beziehungsweise die Saugelemente 31 erfolgen, als auch in Richtung auf die untere Leiterplatte 81 beziehungsweise entfernt zu den Saugelementen. Die Prüfvorrichtung 41 bildet somit mittels der dritten Schicht 91 zwischen den beiden Schichten 88, 89 eine Differenzdruck-Membran. Dadurch kann sowohl ein Überdruck als auch ein Unterdruck in der Druckzelle 83 erzeugt werden. Die Druckzelle 83 in Figur 13 entspricht im Aufbau prinzipiell der Druckzelle 83 in Figur 12. Dadurch, dass die dritte Schicht 91 jedoch in Richtung auf die obere Leiterplatte 81 als auch auf die untere Leiterplatte 81 auslenkbar ist, kann die Druckzelle 83 sowohl als Unterdruckzelle als auch Überdruckzelle wirken, je nach dem, wie eine Ansteuerung des Ventils 40 beziehungsweise des Saugelementes 31 erfolgt. Beispielsweise kann bei einer Prüfung das Ventil 40 mit einem Überdruck beaufschlagt werden, um beispielsweise ein Abblasen eines Werkstücks von der Greifeinrichtung 27 zu bewirken. Um dies zu prüfen wird die Prüfvorrichtung 41 in der Ausgangsposition 49 zu den Saugelementen 31 positioniert. Das Ventil 40 wird mit Druck beaufschlagt. Sobald die an der dritten Schicht 95 vorgesehene Kontaktfläche 61 mit dem Kontakt 65 an der unteren Leiterplatte 81 kontaktiert wird und eine Schaltposition 52 einnimmt, wird erkannt, dass der erforderliche Überdruck für das Abblasen aufgebaut wurde und anliegt. Sofern eine solche Kontaktierung nicht festgestellt wird und die dritte Schicht 91 mit der Kontaktfläche 61 in der Ausgangsposition 49 verbleibt, wird erkannt, dass das Ventil 40 nicht öffnet und somit ein Defekt an dem Ventil 40 vorliegt.
Prüfeinrichtungen 45 sind durch eine erste Schicht 88 sowie eine zweite Schicht 89 gebildet, welche vorzugsweise als eine gelochte Schicht ausgebildet sind. Insbesondere ist eine gelochte Silikonfolie vorgesehen. Die Größe der Lochung ist bevorzugt auf die Größe der Kontakte 65 an der oberen und/oder unteren Leiterplatte 81 angepasst. Zwischen den beiden Schichten 88 und 89 ist eine dritte Schicht 91 vorgesehen. Bevorzugt ist diese als eine geschlossene Silikonfolie ausgebildet. An dieser dritten Schicht 91 sind bevorzugt zur oberen Leiterplatte 81 weisend und zur unteren Leiterplatte 81 weisend jeweils Kontaktflächen 61 vorgesehen. Dabei ist der Abstand der Kontaktflächen 61 zu den Kontakten 65 der Leiterplatten 81 derart vorgesehen, dass bei einem entstehenden Unterdruck in der Druckzelle 83 die Kontaktfläche 61 zur Anlage an den Kontakt 65 der oberen Leiterplatte 81 gelangen kann. Diese Druckzelle 83 wird dann von einer in Figur 13 dargestellten Ausgangsposition 49 in eine Schaltposition 52 übergeführt, die beispielsweise der in Figur 12 entspricht. Die dritte Schicht 91 kann bei einem angelegten Überdruck in die entgegengesetzte Richtung ausgelenkt werden und in eine Schaltposition 52 übergeführt werden, wie dies in Figur 13 dargestellt ist. Die Auslenkung der dritten Schicht 91 steht also in Abhängigkeit der durchzuführenden Prüfung und kann sowohl in Richtung auf die obere Leiterplatte 81 beziehungsweise die Saugelemente 31 erfolgen, als auch in Richtung auf die untere Leiterplatte 81 beziehungsweise entfernt zu den Saugelementen. Die Prüfvorrichtung 41 bildet somit mittels der dritten Schicht 91 zwischen den beiden Schichten 88, 89 eine Differenzdruck-Membran. Dadurch kann sowohl ein Überdruck als auch ein Unterdruck in der Druckzelle 83 erzeugt werden. Die Druckzelle 83 in Figur 13 entspricht im Aufbau prinzipiell der Druckzelle 83 in Figur 12. Dadurch, dass die dritte Schicht 91 jedoch in Richtung auf die obere Leiterplatte 81 als auch auf die untere Leiterplatte 81 auslenkbar ist, kann die Druckzelle 83 sowohl als Unterdruckzelle als auch Überdruckzelle wirken, je nach dem, wie eine Ansteuerung des Ventils 40 beziehungsweise des Saugelementes 31 erfolgt. Beispielsweise kann bei einer Prüfung das Ventil 40 mit einem Überdruck beaufschlagt werden, um beispielsweise ein Abblasen eines Werkstücks von der Greifeinrichtung 27 zu bewirken. Um dies zu prüfen wird die Prüfvorrichtung 41 in der Ausgangsposition 49 zu den Saugelementen 31 positioniert. Das Ventil 40 wird mit Druck beaufschlagt. Sobald die an der dritten Schicht 95 vorgesehene Kontaktfläche 61 mit dem Kontakt 65 an der unteren Leiterplatte 81 kontaktiert wird und eine Schaltposition 52 einnimmt, wird erkannt, dass der erforderliche Überdruck für das Abblasen aufgebaut wurde und anliegt. Sofern eine solche Kontaktierung nicht festgestellt wird und die dritte Schicht 91 mit der Kontaktfläche 61 in der Ausgangsposition 49 verbleibt, wird erkannt, dass das Ventil 40 nicht öffnet und somit ein Defekt an dem Ventil 40 vorliegt.

## Patentansprüche

1. Verfahren zur Zustandskontrolle von Vakuumsaugern (35) einer Greifeinrichtung (27), die zum Greifen von Werkstücken (12, 36) mit Vakuum beaufschlagt werden, wobei jeder Vakuumsauger (35) ein an dem Werkstück (12, 36) angreifendes Saugelement (31) aufweist und jedes Saugelement (31) oder eine Gruppe von Saugelementen (31) mit zumindest einem Ventil (40) angesteuert werden,
- bei welchem zumindest eine Saugplatte (33) der Greifvorrichtung (27), die mehrere Vakuumsauger (35) umfasst und eine Prüfvorrichtung (41), welche mehrere Prüfeinrichtungen (45) umfasst, zueinander ausgerichtet werden, so dass jeder Vakuumsauger (35) einer Prüfeinrichtung (45) gegenüberliegt, wobei jede Prüfeinrichtung (45) in einem Ausgangszustand (49) angeordnet ist, und
- bei welchem zum Prüfen der Saugelemente (31) die Saugelemente (31) der Vakuumsauger (35) der zumindest einen Saugplatte (33) und die Prüfeinrichtungen (45) der Prüfeinrichtung (41) in Kontakt gebracht und die Vakuumsauger (35) mit Vakuum beaufschlagt werden, oder
- bei welchem zur Prüfung des zumindest einen Ventils (40) das oder die Ventile (40) der Greifeinrichtung (27) mit Vakuum beaufschlagt und die Vakuumsauger (35) der zumindest einen Saugplatte (33) und die Prüfeinrichtungen (45) der Prüfvorrichtung (41) in Kontakt gebracht werden, und
- bei welchem zur jeweiligen Prüfung der Saugelemente (31) oder des zumindest einen Ventils (40) von jeder Prüfeinrichtung (45) der Prüfvorrichtung (41) ein Signal ausgegeben wird, sobald an der Prüfeinrichtung (45) eine Veränderung gegenüber dem Ausgangszustand (49) erfasst wird,
**dadurch gekennzeichnet, dass** die Veränderung des Ausgangszustandes (49) der Prüfeinrichtung (45) in der Form oder der Lage der Prüfeinrichtung (45) oder in einer Kombination durch die Form und Lage der Prüfeinrichtung (45) erfasst wird.

2. Verfahren nach Anspruch 1, **dadurch gekennzeichnet, dass** eine Veränderung des Ausgangszustandes (49) der Prüfeinrichtung (45) in eine Schaltposition (52) der Prüfeinrichtung (45) durch zumindest ein optisches oder elektrisches Signal ausgegeben wird.

3. Verfahren nach einem der vorhergehenden Ansprüche, **dadurch gekennzeichnet, dass** von jeder Prüfeinrichtung (45) ein Signal ausgegeben wird, sofern an der Prüfeinrichtung (45) eine Veränderung des Ausgangszustandes (49) nach der Kontaktierung der Vakuumsauger (35) mit den Prüfeinrichtungen (45) und der Beaufschlagung der Vakuumsauger (35) mit Vakuum erfasst wird.

4. Verfahren nach Anspruch 3, **dadurch gekennzeichnet, dass** die Prüfeinrichtung (45) als eine Schnappscheibe ausgebildet ist, welche in einem Ausgangszustand (49) entgegengesetzt zum Saugelement (31) ausgerichtet wird oder dass die Prüfeinrichtung (45) als eine Folie (46) mit zumindest einer polkappenförmigen Wölbung (48) ausgebildet ist, welche konkav zum Saugelement (31) ausgerichtet ist oder dass die Prüfeinrichtung (45) als eine ebene Folie (46) ausgebildet ist und dass nach der Kontaktierung der Prüfeinrichtung (45) mit dem Saugelement (31) und dem Anlegen des Vakuums bei einem funktionsfähigen Saugelement (31) die Schnappscheibe oder die Folie (46) mit der zumindest einen polkappenförmigen Wölbung (48) oder die ebene Folie (46) in eine konvexe Ausrichtung als Schaltposition (52) übergeführt werden.

5. Verfahren nach Anspruch 4, **dadurch gekennzeichnet, dass** die Schaltposition (52) der Prüfeinrichtungen (45) durch einen Werker optisch oder haptisch erfasst wird oder dass die Schaltposition (52) der Prüfeinrichtungen (45) durch einen optischen Sensor (58), einen elektrischen Sensor (63) oder ein elektrisches Schaltelement oder einen beschreibaren Sensor (54) erfasst wird.

6. Verfahren nach einem der Ansprüche 1 bis 3, **dadurch gekennzeichnet, dass** die Prüfeinrichtung (45) als eine Scheibe (72), insbesondere Magnetscheibe, in einer Kammer (71) ausgebildet ist, welche innerhalb der Kammer (71) in der Höhe veränderbar geführt wird und dass nach dem Kontaktieren dieser Prüfeinrichtung (45) mit dem Saugelement (31) und dem darauf folgenden Anlegen des Vakuums bei einem funktionsfähigen Saugelement (31) die Scheibe (72) aus einer Ausgangsposition (49) in der Kammer (71) in eine Schaltposition (52) in der Kammer (71) übergeführt wird.

7. Verfahren nach einem der Ansprüche 1 bis 3, **dadurch gekennzeichnet, dass** die Prüfeinrichtung (45) aus Kontakten (65) an einer Leiterplatte (81) ausgebildet ist, der eine Schaltmatte (82) mit Kontaktflächen (61) in einer Druckzelle (83) zugeordnet ist und die in einem Ausgangszustand (49) beabstandet zueinander positioniert sind und nach dem Kontaktieren der Saugelemente (31) an der Prüfeinrichtung (45) und dem Anlegen eines Vakuums an den Vakuumsaugern (35) über zumindest eine Bohrung (84) in der Leiterplatte (81) benachbart zu den Kontakten (65) ein Unterdruck in der Druckzelle (83) erzeugt wird und bei einem funktionsfähigen Saugelement (31) die Kontaktfläche (61) an dem Kontakt (65) anliegt und ein Signal ausgegeben wird.

8. Verfahren nach einem der Ansprüche 1 oder 2, **dadurch gekennzeichnet, dass** nach dem Kontaktieren der Vakuumsauger (35) und der Prüfeinrichtungen (45) und einer darauf folgenden Verfahrbewegung der Vakuumsauger (35) relativ zu den Prüfeinrichtungen (45) von jeder Prüfeinrichtung (45) ein Signal ausgegeben wird, sobald von der Prüfeinrichtung (45) eine Veränderung eines Ausgangszustandes (49) erfasst wird.

9. Verfahren nach Anspruch 8, **dadurch gekennzeichnet, dass** die Prüfeinrichtung (45) als ein federgelagerter Stößel (76) in der Lage veränderbar an einer Halteplatte (78) der Prüfvorrichtung (41) geführt wird und die Veränderung der Lage des Stößels (76) aus einem Ausgangszustand (49) durch eine Fahrbewegung der Saugplatte (33) und der Prüfvorrichtung (41) voneinander weg in eine Schaltposition (52) bei einem funktionsfähigen Saugelement (31) durch einen Sensor erfasst wird.

10. Verfahren nach Anspruch 9, **dadurch gekennzeichnet, dass** eine Wegstrecke der Verfahrbewegung der Saugplatte (33) und der Prüfeinrichtung (45) relativ zueinander erfasst wird und aus dem erfassten Weg und einer Änderung des Schaltzustandes der Prüfeinrichtung (45) eine Abreißkraft und/oder Haltekraft des Saugelementes (31) von der Prüfeinrichtung (45) ermittelt wird.

11. Verfahren nach Anspruch 8, **dadurch gekennzeichnet, dass** die Prüfeinrichtung (45) als ein federgelagerter Stößel (76) in der Lage veränderbar an der Halteplatte (78) der Prüfvorrichtung (41) geführt wird und bei einer Veränderung der Lage des Stößels (76) aus dem Ausgangszustand (49) durch eine Verfahrbewegung der Saugplatte (33) und der Prüfeinrichtung (45) voneinander weg in eine Schaltposition (52) bei einem nicht funktionsfähigen Ventil (40) durch einen Sensor erfasst wird.

12. Prüfvorrichtung für eine Zustandskontrolle von Vakuumsaugern (35) einer Greifvorrichtung (27), wobei jeder Vakuumsauger (35) ein am Werkstück (12, 36) angreifendes Saugelement (31) aufweist, und jedem Saugelement (31) oder einer Gruppe von Saugelementen (31) zumindest ein Ventil (40) zugeordnet ist, wobei die Prüfvorrichtung eine Vielzahl von Prüfeinrichtungen (45) aufweist, die in einer Ebene nebeneinander und zu einer Außenseite einer Trägeranordnung (44) angeordnet sind, wobei
- jede Prüfeinrichtung (45) in einer Ausgangsposition (49) vorgesehen ist und in eine Schaltposition (52) überführbar ist und
- jede Prüfeinrichtung (45) unabhängig von der anderen Prüfeinrichtung (45) in die Schaltposition (52) überführbar ist und
- die Ausgangsposition (49) und/oder die Schaltposition (52) jeder Prüfeinrichtung (45) separat erfassbar ist, **dadurch gekennzeichnet, dass** jede Prüfeinrichtung (45) Kontakte (65) an zumindest einer Leiterplatte (81) umfasst, die einer Schaltmatte (82) mit Kontaktflächen (61) in einer Druckzelle (83) zugeordnet sind, die in einem Ausgangszustand (49) beabstandet zueinander positioniert sind und nach dem Kontaktieren eines der Saugelemente (31) an der Prüfeinrichtung (45) über zumindest eine Bohrung (84) benachbart zu den Kontakten (65) ein Unterdruck oder ein Überdruck in der Druckzelle (83) erzeugt und bei einem funktionsfähigen Saugelement (31) oder Ventil (40) die Kontaktfläche (61) an dem Kontakt (65) anliegt und ein Signal ausgegeben wird.

## Claims

1. A method for checking the state of vacuum suctioning devices (35) of a gripping apparatus (27), a vacuum being placed on the devices for the purposes of gripping workpieces (12, 36), wherein each vacuum suctioning device (35) has a suction element (31) engaging on the workpiece (12, 36), and each suction element (31), or a group of suction elements (31), is actuated by at least one valve (40),
- in which at least one suction plate (33) of the gripping device (27), said plate comprising a plurality of vacuum suctioning devices (35), and a testing device (41) which comprises a plurality of testing apparatuses (45) are aligned with one another so that each vacuum suctioning device (35) lies opposite to a testing apparatus (45), wherein each testing apparatus (45) is arranged in an initial state (49), and
- in which, to test the suction elements (31), the suction elements (31) of the vacuum suctioning devices (35) of the at least one suction plate (33) and the testing apparatuses (45) of the testing device (41) are brought into contact and a vacuum is placed on the vacuum suctioning devices (35), or
- in which, for the testing of the at least one valve (40), a vacuum is placed on the valve or valves (40) of the gripping apparatus (27) and the vacuum suctioning devices (35) of the at least one suction plate (33) and the testing apparatuses (45) of the testing device (41) are brought into contact, and
- in which, for the respective testing of the suction elements (31) or of the at least one valve (40), a signal is output by each testing apparatus (45) of the testing device (41) as soon as a change with respect to the initial state (49) is detected at the testing apparatus (45),
**characterized in that** a change in the initial state (49) of the testing apparatus (45) is detected in the form or position of the testing apparatus (45) or, in a combination, by the shape and position of the testing apparatus (45).

2. The method according to claim 1, **characterized in that** a change in the initial state (49) of the testing apparatus (45) into a switching position (52) of the testing apparatus (45) is output by at least one optical or electrical signal.

3. The method according to any one of the preceding claims, **characterized in that** a signal is output by each testing apparatus (45) if a change in the initial state (49) is detected at the testing apparatus (45) after the contacting of the vacuum suctioning devices (35) with the testing apparatuses (45) and the placement of a vacuum on the vacuum suctioning devices (35).

4. The method according to claim 3, **characterized in that** the testing apparatus (45) is designed as a snap-action disk which is oriented in the opposite direction to the suction element (31) in an initial state (49), or **in that** the testing apparatus (45) is designed as a film (46) with at least one polar cap-shaped curvature (48) which is aligned concavely with respect to the suction element (31), or **in that** the testing apparatus (45) is designed as a flat film (46), and **in that**, after the testing apparatus (45) contacts the suction element (31) and the application of the vacuum in the case of a functional suction element (31), the snap-action disk or the film (46) with the at least one polar cap-shaped curvature (48) or the flat film (46) is transitioned to a convex orientation as the switching position (52).

5. The method according to claim 4, **characterized in that** the switching position (52) of the testing apparatuses (45) is detected optically or haptically by a worker or **in that** the switching position (52) of the testing apparatuses (45) is detected by an optical sensor (58), an electrical sensor (63) or an electrical switching element or a writable sensor (54).

6. The method according to any one of claims 1 to 3, **characterized in that** the testing apparatus (45) is designed as a disk (72), in particular a magnetic disk, in a chamber (71), the disk being guided in a height-variable manner within the chamber (71), and **in that**, after this testing apparatus (45) contacts the suction element (31) and the subsequent application of the vacuum in the case of a functional suction element (31), the disk (72) is transitioned from a starting position (49) in the chamber (71) to a switching position (52) in the chamber (71).

7. The method according to any one of claims 1 to 3, **characterized in that** the testing apparatus (45) is designed from contacts (65) on a printed circuit board (81) to which a switching mat (82) with contact surfaces (61) in a pressure cell (83) is assigned and which are positioned at a distance from one another in an initial state (49) and, after the suction elements (31) makes contact on the testing apparatus (45) and the applying of a vacuum to the vacuum suctioning devices (35), a negative pressure is generated in the pressure cell (83) via at least one bore (84) in the printed circuit board (81) adjacent to the contacts (65), and in the case of a functional suction element (31), the contact surface (61) bears against the contact (65) and a signal is output.

8. The method according to any one of claims 1 or 2, **characterized in that**, after the contact between the vacuum suctioning devices (35) and the testing apparatuses (45) and a subsequent displacement movement of the vacuum suctioning devices (35) relative to the testing apparatuses (45), a signal is output by each testing apparatus (45) as soon as a change in an initial state (49) is detected by the testing apparatus (45).

9. The method according to claim 8, **characterized in that** the testing apparatus (45) is guided as a spring-mounted tappet (76) positionally variably on a retaining plate (78) of the testing apparatus (41), and the change in the position of the tappet (76) from an initial state (49) due to a travel movement of the suction plate (33) and the testing device (41) away from one another into a switching position (52) in the case of a functional suction element (31) is detected by a sensor.

10. The method according to claim 9, **characterized in that** a distance of the displacement movement of the suction plate (33) and the testing apparatus (45) relative to one another is detected and a tear-off force and/or holding force of the suction element (31) is determined by the testing apparatus (45) from the detected path and a change in the switching state of the testing apparatus (45).

11. The method according to claim 8, **characterized in that** the testing apparatus (45) is guided positionally variably on the holding plate (78) of the testing device (41) as a spring-mounted tappet (76) and, in the event of a change in the position of the tappet (76) from the initial state (49) due to displacement movement of the suction plate (33) and the checking device (45) away from one another into a switching position (52) in the case of a non-functional valve (40) is detected by a sensor.

12. A testing device for checking the state of vacuum suctioning devices (35) of a gripping device (27), wherein each vacuum suctioning device (35) has a suction element (31) engaging on the workpiece (12, 36), and at least one valve (40) is assigned to each suction element (31) or to a group of suction elements (31), wherein the testing device has a plurality of testing apparatuses (45) which are arranged next to one another in a plane and are arranged toward an outer side of a support arrangement (44), wherein
- each testing apparatus (45) is provided in an initial position (49) and can be transitioned to a switching position (52), and
- each testing apparatus (45) can be transitioned to the switching position (52) independently of the other testing apparatus (45), and
- the initial position (49) and/or the switching position (52) of each testing apparatus (45) can be detected separately, **characterized in that** each testing apparatus (45) comprises contacts (65) on at least one printed circuit board (81), the contacts being assigned to a switching mat (82) with contact surfaces (61) in a pressure cell (83) and being positioned at a distance from one another in an initial state (49) and, after the contacting of one of the suction elements (31) on the testing apparatus (45), a negative pressure or a positive pressure is generated in the pressure cell (83) via at least one bore (84) adjacent to the contacts (65), and in the case of a functional suction element (31) or valve (40) the contact surface (61) bears against the contact (65) and a signal is output.

## Revendications

1. Procédé de contrôle d'état de ventouses à vide (35) d'un ensemble de préhension (27), lesquelles sont soumises à une mise sous vide pour la préhension de pièces (12, 36), dans lequel chaque ventouse à vide (35) présente un élément de succion (31) agissant sur la pièce (12, 36) et chaque élément de succion (31) ou un groupe d'éléments de succion (31) est commandé par au moins une valve (40),
- dans lequel au moins une plaque de succion (33) du dispositif de préhension (27), qui comprend plusieurs ventouses à vide (35), et un dispositif de contrôle (41), lequel comprend plusieurs organes de contrôle (45), sont alignés entre eux de sorte que chaque ventouse à vide (35) fait face à une organe de contrôle (45), dans lequel chaque organe de contrôle (45) est disposé dans un état initial (49), et
- dans lequel, pour contrôler les éléments de succion (31), les éléments de succion (31) des ventouses à vide (35) d'au moins une plaque de succion (33) et les organes de contrôle (45) du dispositif de contrôle (41) sont mis en contact et les ventouses à vide (35) sont soumises à une mise sous vide, ou
- dans lequel, pour contrôler lesdites au moins une valve(s) (40), la ou les valve(s) (40) de l'ensemble de préhension (27) sont soumises à une mise sous vide et les ventouses à vide (35) d'au moins une plaque de succion (33) et les organes de contrôle (45) du dispositif de contrôle (41) sont mis en contact, et
- dans lequel, pour le contrôle respectif des éléments de succion (31) ou d'au moins une valve (40), un signal est émis par chaque organe de contrôle (45) du dispositif de contrôle (41) dès qu'une modification par rapport à l'état initial (49) est détectée au niveau de l'organe de contrôle (45),
**caractérisé en ce que** la modification de l'état initial (49) de l'organe de contrôle (45) est détectée dans la forme ou le positionnement de l'organe de contrôle (45) ou dans une combinaison de la forme et du positionnement de l'organe de contrôle (45).

2. Procédé selon la revendication 1, **caractérisé en ce qu'**une modification de l'état initial (49) de l'organe de contrôle (45) en une position de commutation (52) de l'organe de contrôle (45) est indiquée par au moins un signal optique ou électrique.

3. Procédé selon l'une quelconque des revendications précédentes, **caractérisé en ce qu'**un signal est émis provenant de chaque organe de contrôle (45) dès qu'une modification de l'état initial (49) est détectée au niveau de l'organe de contrôle (45) après la mise en contact des ventouses à vide (35) avec les organes de contrôle (45) et la mise sous vide des ventouses à vide (35).

4. Procédé selon la revendication 3, **caractérisé en ce que** l'organe de contrôle (45) est réalisé sous la forme d'un disque à ressort, lequel est orienté dans un état initial (49) à l'opposé de l'élément de succion (31), ou **en ce que** l'organe de contrôle (45) est réalisé sous la forme d'un film (46) présentant au moins un bombement en forme de calotte (48), lequel est orienté de façon concave vers l'élément de succion (31), ou **en ce que** l'organe de contrôle (45) est réalisé sous la forme d'un film (46) plan, et **en ce qu'**après la mise en contact de l'organe de contrôle (45) avec l'élément de succion (31) et l'application du vide, dans le cas d'un élément de succion (31) fonctionnel, le disque à ressort ou le film (46) avec au moins un bombement en forme de calotte (48) ou le film (46) plan est amené dans une orientation convexe en tant que position de commutation (52).

5. Procédé selon la revendication 4, **caractérisé en ce que** la position de commutation (52) des organes de contrôle (45) est détectée visuellement ou par palpation par un opérateur ou **en ce que** la position de commutation (52) des organes de contrôle (45) est détectée par un capteur optique (58), un capteur électrique (63), ou un élément de commutation électrique ou un capteur pilotable (54).

6. Procédé selon l'une des revendications 1 à 3, **caractérisé en ce que** l'organe de contrôle (45) est réalisé sous la forme d'un disque (72), en particulier un disque magnétique, dans une chambre (71), lequel est guidé de manière à pouvoir varier en hauteur à l'intérieur de la chambre (71) et **en ce qu'**après la mise en contact de cet organe de contrôle (45) avec l'élément de succion (31) et l'application du vide qui s'ensuit, dans le cas d'un élément de succion (31) fonctionnel, le disque (72) est amené depuis une position initiale (49) dans la chambre (71) vers une position de commutation (52) dans la chambre (71).

7. Procédé selon l'une des revendications 1 à 3, **caractérisé en ce que** l'organe de contrôle (45) est constitué à partir de contacts (65) sur une carte de circuit imprimé (81), à laquelle est associée une nappe de commutation (82) présentant des surfaces de contact (61) dans une cellule de pression (83), et lesquelles sont positionnées espacées les unes des autres dans un état initial (49), et **en ce qu'**après la mise en contact des éléments de succion (31) avec l'organe de contrôle (45) et l'application d'un vide aux ventouses à vide (35), une dépression est générée dans la cellule de pression (83) par au moins un perçage (84) dans la carte de circuit imprimé (81) adjacent aux contacts (65), et, dans le cas d'un élément de succion (31) fonctionnel, la surface de contact (61) vient en appui contre le contact (65) et un signal est émis.

8. Procédé selon l'une des revendications 1 ou 2, **caractérisé en ce qu'**après la mise en contact des ventouses à vide (35) et des organes de contrôle (45) et un mouvement de déplacement qui s'ensuit des ventouses à vide (35) par rapport aux organes de contrôle (45), un signal est émis par chaque organe de contrôle (45) dès qu'une modification d'un état initial (49) est détectée par l'organe de contrôle (45).

9. Procédé selon la revendication 8, **caractérisé en ce que** l'organe de contrôle (45) en tant que poussoir (76) monté sur ressort, est guidé de manière à pouvoir varier en positionnement sur une plaque de maintien (78) du dispositif de contrôle (41), et **en ce que** la modification du positionnement du poussoir (76) depuis un état initial (49) vers une position de commutation (52), lors d'un mouvement d'avancement de la plaque de succion (33) et du dispositif de contrôle (41) s'éloignant l'un de l'autre, est détectée par un capteur dans le cas d'un élément de succion (31) fonctionnel.

10. Procédé selon la revendication 9, **caractérisé en ce qu'**un trajet de déplacement du mouvement de déplacement de la plaque de succion (33) et de l'organe de contrôle (45) l'un par rapport à l'autre est détecté et **en ce que**, à partir du trajet détecté et d'un changement de l'état de commutation de l'organe de contrôle (45), une force d'arrachement et/ou une force de maintien de l'élément de succion (31) par rapport à l'organe de contrôle (45) est déterminée.

11. Procédé selon la revendication 8, **caractérisé en ce que** l'organe de contrôle (45), en tant que poussoir (76) monté sur ressort, est guidé de manière à pouvoir varier en positionnement sur la plaque de maintien (78) du dispositif de contrôle (41), et lors d'une modification du positionnement du poussoir (76) depuis l'état initial (49) vers une position de commutation (52), provoquée par un mouvement de déplacement de la plaque de succion (33) et de l'organe de contrôle (45) s'éloignant l'une de l'autre, cette modification est détectée par un capteur dans le cas d'une valve (40) non fonctionnelle.

12. Dispositif de contrôle pour un contrôle d'état de ventouses à vide (35) d'un dispositif de préhension (27), dans lequel chaque ventouse à vide (35) présente un élément de succion (31) agissant sur la pièce (12, 36), et un élément de succion (31) ou un groupe d'éléments de succion (31) est associé à au moins une valve (40), dans lequel le dispositif de contrôle présente une pluralité d'organes de contrôle (45) disposés dans un plan les uns à côté des autres et du côté extérieur d'un ensemble de support (44), dans lequel
- chaque organe de contrôle (45) est prévu dans une position initiale (49) et peut être amené dans une position de commutation (52), et
- chaque organe de contrôle (45) peut être amené indépendamment des autres organes de contrôle (45) dans la position de commutation (52), et
- la position initiale (49) et/ou la position de commutation (52) de chaque organe de contrôle (45) est détectable séparément, **caractérisé en ce que** chaque organe de contrôle (45) comprend des contacts (65) sur au moins une carte de circuit imprimé (81), auxquels est associée une nappe de commutation (82) présentant des surfaces de contact (61) dans une cellule de pression (83), lesquelles sont positionnées espacées les unes des autres dans un état initial (49), et **en ce qu'**après la mise en contact d'un élément de succion (31) avec l'organe de contrôle (45), une dépression ou une surpression est générée dans la cellule de pression (83) par au moins un perçage (84) adjacent aux contacts (65), et, dans le cas d'un élément de succion (31) ou d'une valve (40) fonctionnel(le), la surface de contact (61) vient en appui contre le contact (65) et un signal est émis.
